# EUROPÄISCHE PATENTSCHRIFT

(11) **EP 1 048 746 B1**
(45) Veröffentlichungstag und Bekanntmachung des Hinweises auf die Patenterteilung: **21.09.2005**
(21) Anmeldenummer: 99810359.2
(22) Anmeldetag: 28.04.1999
(51) Int. Cl.: C23C 14/56, B29C 51/00

(54) **Verfahren und Vorrichtung zur Herstellung von Packungen**
Method and apparatus for making packages
Procédé et dispositif pour la fabrication d'emballages

(43) Veröffentlichungstag der Anmeldung: 02.11.2000
(73) Patentinhaber: Alcan Technology & Management AG, 8212 Neuhausen am Rheinfall (CH)
(72) Erfinder: Lohwasser, Wolfgang, 78262 Gailingen (DE)

(56) Entgegenhaltungen:
- EP-A- 0 463 392
- US-A- 5 811 050
- PATENT ABSTRACTS OF JAPAN vol. 199, no. 604, 30. April 1996 (1996-04-30) & JP 07 315356 A (SUZUPATSUKU KK), 5. Dezember 1995 (1995-12-05)

## Beschreibung

Die Erfindung betrifft ein Verfahren zur Herstellung von Packungen mit guter Durchtrittssperrwirkung für Wasserdampf und Gase nach dem Oberbegriff von Anspruch 1.

Es ist bekannt, Packungen aus einem folienförmigen Werkstoff mit aus diesem herausgeformten Behältern, wie z.B. die Bodenteile von Blisterverpackungen, auch Durchdrückpackungen genannt, oder andere Verpackungsbehälter wie Menüschalen und dgl., beispielsweise durch Tiefziehen, Streckziehen oder Thermoformen herzustellen. Die Packungen können aus thermoplastischen Stoffen oder aus Folienverbunden oder Laminaten, wie z.B. Aluminiumfolien mit auflaminierten Kunststoff-Folien oder aufextrudierten Schichten aus thermoplastischen Stoffen hergestellt werden.

Zur Erzielung einer Packung mit guter Durchtrittssperrwirkung für Wasserdampf und Gase, einer sogenannten Barriereschicht, ist es bekannt, den folien- bzw. bandförmig vorliegenden Werkstoff zur Herstellung der Packung so auszuwählen, dass er die gewünschten Barriereeigenschaften bereits aufweist. Als Ausgangsmaterialien dienen Werkstoffe mit organischen Barriereschichten wie beispielsweise Polyvinylidenchlorid (PVDC) oder ein unter der Bezeichnung Aclar bekanntgewordenes Fluorpolymer. Für sauerstoffempfindliche Füllgüter sind auch die Polymere des Ethylvinyl-Alkohols als Sperrschicht bekannt. Eine bei Blisterverpackungen für Tabletten eingesetzte Folie weist Aluminium als Sperrschicht auf. Bekannt sind auch Kunststofffolien, deren Barriereeigenschaften durch im Vakuumdünnschichtverfahren mittels PVD (physical vapour deposition)- oder CVD (chemical vapour deposition)-Techniken aufgebrachte keramische Beschichtungen oder Aluminiumschichten in gewissen Fällen verbessert werden können. Bekannt sind beispielsweise Kunststofffolien mit einer 10 bis 200 nm dicken Schicht aus Al, Al₂O₃ oder aus SiOₓ, wobei x eine Zahl zwischen 0.9 und 2 ist.

Die vorstehend genannten Folien mit Barriereeigenschaften haben wesentliche Nachteile. So enthalten sowohl Aclar als auch PVDC Chlor, Aclar darüber hinaus auch noch Fluor, weshalb beide Materialien nur sehr schwer zu entsorgen sind. Zudem sind beide Materialien verhältnismässig teuer. EVOH ist nur für Lebensmittel geeignet, da es keine guten Wasserdampfsperreigenschaften besitzt. Verbundfolien mit Aluminium als Barriereschicht weisen zwar ausgezeichnete Sperreigenschaften auf, sind aber ebenfalls verhältnismässig teuer und lassen sich nur beschränkt verformen. Ein weiterer Nachteil ist die fehlende Lichttransparenz, welche heute bei Blisterverpackungen für Tabletten vermehrt gefordert wird.

Der Erfindung liegt deshalb die Aufgabe zugrunde, ein Verfahren zur Herstellung von Packungen der eingangs genannten Art zu schaffen, welches die den Verfahren nach dem Stand der Technik anhaftenden Nachteile nicht aufweist. Mit dem Verfahren soll es möglich sein, unterschiedliche Arten von Barriereschichten auf einfache und kostengünstige Weise bereitzustellen.

Zur erfindungsgemässen Lösung der Aufgabe führt, dass die Durchtrittssperrwirkung der Packung für Wasserdampf und Gase nach dem Formen der Behälter in Form einer Beschichtung mit Materialien mit der gewünschten Durchtrittssperrwirkung im Vakuum erzeugt wird.

Das erfindungsgemässe Verfahren ermöglicht die Herstellung von Packungen aus einer grossen Anzahl von Ausgangsmaterialien. Zweckmässig sind vor allem transparente Kunststoffe mit guten Umformeigenschaften wie Polyethylen (PE), Polypropylen (PP), Cyclo-Olefin-Copolymer (COC), Polyvinylchlorid (PVC), Polyethylenterephthalat (PET), Polyamid (PA) sowie aus den genannten Werkstoffen hergestellte Laminate.

Die Beschichtung der Packung kann auf der Behälterinnen- oder aussenseite durchgeführt werden. Die aussenseitige Beschichtung ermöglicht beispielsweise das Aufbringen der Barriereschicht auf die bereits gefüllte und verschlossene Packung.

Die Beschichtung kann durch Sputtem, Bedampfen oder durch Plasma-Polymerisation erfolgen. Eine zweckmässige Beschichtung besteht aus Metallen oder aus Metalloxiden. Bevorzugt wird das Aufsputtern von Metallen, insbesondere von Aluminium, oder von Metalloxiden, insbesondere von SiOₓ, wobei x eine Zahle zwischen 0.9 und 2 ist, oder die Plasmapolymerisation von Siliziumoxiden, bevorzugt ausgehend von Organosilanen wie Hexamethyldisiloxan (HMDSO) oder Tetramethyldisiloxan (TMDSO). Es ist aber auch eine Plasmapolymerisation von hochvernetzten Kohlenwasserstoffschichten, z.B. ausgehend von Methan, Ethylen oder Acetylen möglich.

Bei einer besonders bevorzugten Ausgestaltung des erfindungsgemässen Verfahrens wird die Herstellung der Packungen, das Beschichten und ggf. das Abfüllen und Verschliessen in einer Linie durchgeführt.

Das erfindungsgemässe Verfahren eignet sich insbesondere zur Herstellung von Blisterverpackungen mit guter Durchtrittssperrwirkung für Wasserdampf und Gase, wobei je nach Wahl der zur Beschichtung eingesetzten Materialien eine Lichttransparenz oder eine Lichtundurchlässigkeit eingestellt werden kann.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt schematisch in
- Fig. 1 eine Schrägsicht auf eine Anlage zur Herstellung von Packungen mit einer Vakuumbeschichtungsstation;
- Fig. 2 eine Schrägsicht auf die Vakuumbeschichtungsstation von Fig. 1;
- Fig. 3 die Draufsicht auf den Drehteller der Vakuumbeschichtungsstation von Fig. 2.

Eine Anlage 10 zur Herstellung von Packungen 12 - im dargestellten Beispiel Bodenteile von Blisterverpackungen - weist eine Verformungsstation 14, eine Schneidstation 16 und eine Vakuumbeschichtungsstation 18 auf.

Von einer Vorratsrolle 20 wird ein zur Herstellung der Packungen 12 vorgesehener Werkstoff - beispielsweise Polypropylen -- in Form einer Folie 22 der Verformungsstation 14 zugeführt, in welcher über Stempel 24 Behälter 26 der späteren Packung aus der Folie 22 herausgeformt werden. Die derart verformte Folie 22 wird in der nachfolgenden Schneidstation 16 zu den einzelnen Pakkungen 12 geschnitten und die Packungen werden mittels eines Roboterarmes 28 der Vakuumbeschichtungsstation 18 zugeführt. Mit demselben Roboterarm 28 erfolgt auch das Entladen der beschichteten Packungen 12a.

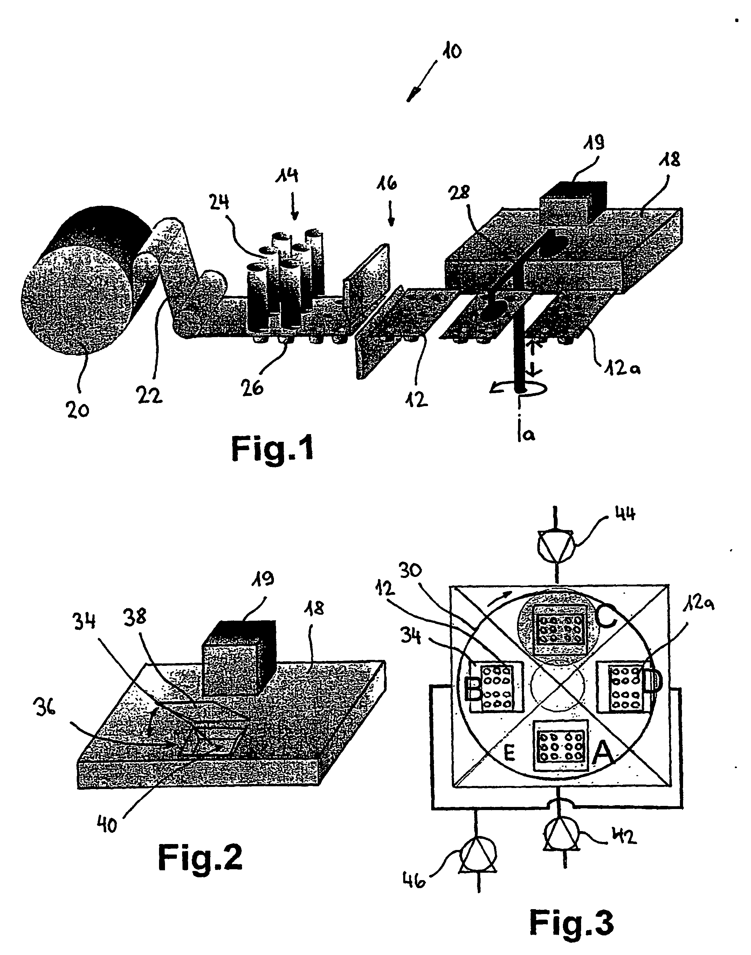

Die Vakuumbeschichtungsanlage 18 weist gemäss Fig. 3 einen Drehteller 30 mit vier Aufnahmestationen zur Aufnahme von zu beschichtenden bzw. beschichteten Packungen 12, 12a auf. Die Aufnahmestationen sind als in den Drehteller 30 eingelegte, senkrecht zur Drehtellerebene E bewegbare Platten 34 ausgestaltet. Durch eine taktweise Drehung um einen Winkel von jeweils 90° durchlaufen die Platten 34 vier Sektion A, B, C und D der Vakuumbeschichtungsstation 18. Über der Sektion C ist die eigentliche Beschichtungsvorrichtung 19 angeordnet.

Wie in Fig. 2 gezeigt, weist die Vakuumbeschichtungsstation 18 eine Gasschleuse 36 zum Be- und Entladen der Station auf. Die Gasschleuse wird gebildet durch einen im geschlossenen Zustand abdichtenden Deckel 38 und durch die Platte 34 in der Sektion A. Die Platte 34 mit den darauf liegenden beschichteten Packungen 12a wird über eine in der Zeichnung nicht dargestellte Hebevorrichtung von unten gegen eine am Rand der Gasschleuse 36 an der Innenwand der Vakuumbeschichtungsstation 18 angeordnete Dichtung gedrückt und schliesst damit die Vakuumbeschichtungsstation 18 nach aussen hin dicht ab. Daraufhin wird der Zwischenraum 40 zwischen der Platte 34 und dem Gasschleusendeckel 38 mit Luft geflutet und der Deckel 38 geöffnet. Die beschichteten Packungen 12a werden über den Roboterarm 28 gegen unbeschichtete Packungen 12 ausgetauscht. Der Roboterarm 28 kann beispielsweise so ausgestaltet sein, dass er jeweils gleichzeitig eine unbeschichtete und eine beschichtete Packung beispielsweise durch Ansaugen ergreift, in Richtung einer Roboterdrehachse a verschiebt, nach einer Drehung von 180° um die Roboterdrehachse a den Austausch der beiden Packungen 12, 12a vornimmt und durch eine Rückverschiebung in Richtung der Roboterdrehachse a die unbeschichtete Packung 12 auf die Platte 34 absenkt. Gleichzeitig wird die beschichtete Packung 12a zur Weiterverarbeitung bzw. zum Füllen der Behälter 26 auf die Fertigungslinie zurückgelegt.

Nach dem Aufsetzen der unbeschichteten Packungen 12 auf die Platte 34 im Sektor A wird der Gasschleusendeckel 38 geschlossen und der Zwischeraum 40 zwischen Platte 34 und Deckel 38 evakuiert. Anschliessend wird die Platte 34 mit den darauf befindlichen unbeschichteten Packungen 12 mittels der Hebevorrichtung wieder abgesenkt. Während dieses Einschleusvorgangs findet in der Sektion C die Beschichtung der zu diesem Zeitpunkt dort befindlichen Pakkungen 12 mit beispielsweise verdampftem Aluminium statt. Nach dem Einschleusen neuer Packungen 12 in der Sektion A und nach erfolgter Beschichtung in der Sektion C beginnt ein neuer Zyklus. Dazu wird der Drehteller 30 um 90° weitergedreht, so dass beschichtete Packungen 12a unter die Gasschleuse 36 und unbeschichtete Packungen 12 in die Beschichtungszone im Sektor C gelangen.

Die vier Sektionen A, B, C und D sind durch Spaltschleusen vakuummässig voneinander entkoppelt, so dass bei der Einschleusung mit eingebrachtes Gas nicht in die Beschichtungszone gelangen kann. Die Sektoren B und D dienen der besseren Trennung des Beschichtungssektors C und des Einschleussektors A. Gemäss Fig. 3 sind diese beiden Zonen neben den Pumpen 42 der Gasschleuse 36 und der Pumpe 44 im Beschichtungsbereich der Sektion C mit einer weiteren Pumpe 46 versehen, die durch die Einschleuszone eindringendes Gas abpumpt und damit auch für definierte Vakuumbedingungen in der Beschichtungszone sorgt. Die Sektoren B und D können auch weggelassen oder für weitere Vakuumprozesse, wie z.B. eine Plasmavorbehandlung, genutzt werden

Mit der dargestellten Anlage 10 ist es möglich, in der Beschichtungszone im Sektor C eine Beschichtung - beispielsweise eine Abscheidung von gesputtertem Aluminium - durchzuführen und gleichzeitig einen nahezu kontinuierlichen Materialfluss zwischen Aussenbereich und Vakuumbereich aufrecht zu erhalten. Mit dem Einsatz der beschriebenen Vakuumstation 18 ist es auf einfache Weise möglich, den Beschichtungsvorgang direkt in eine Abpacklinie - beispielsweise eine Blister-Abpacklinie - zu integrieren. Zur Erzielung höherer Taktraten ist es aber auch möglich, zwei oder mehrere der Vakuumbeschichtungsstation 18 in eine Abpacklinie zu integrieren, so dass diese alternierend immer einen Satz Packungen 12 beschichten.

Je nach Aufgabe der beschichteten Packungen 12 auf die Platte 34 können die ungefüllten Packungen 12 sowohl von innen als auch von aussen beschichtet werden. Nach der Beschichtung werden die Packungen 12a auf der Abpacklinie gefüllt und beispielsweise mit einer Aluminium-Durchdrückfolie verschlossen.

Aus der Zeichnung ist ohne weiteres erkennbar, dass auch fertig abgepackte und mit einer Deckelfolie verschlossene Packungen von aussen beschichtet werden können. Hierzu muss die Vakuumbeschichtungsstation zusätzlich einen Niederhalter aufweisen, der die Packungen mit ihrer dünnen Deckelfolie nach unten vollflächig gegen eine plane Platte drückt, die umgeformten Behälter jedoch zur Beschichtungsquelle hin frei lässt. Diese Massnahme ist deshalb erforderlich, weil die Deckelfolie ansonsten durch den in der verschlossenen Packung herrschenden Atmosphärendruck reissen würde.

## Patentansprüche

1. Verfahren zur Herstellung von Packungen (12) aus einem ersten Werkstoff (22), mit guter Durchtrittssperrwirkung für Wasserdampf und Gase, mit wenigstens einer als Behälter (26) zur Aufnahme eines Füllgutes dienenden Vertiefung, wobei die Packungen (12) mit der/den Vertiefung/en aus dem ersten Werkstoff (22) geformt, das Füllgut in die Behälter (26) gefüllt und die gefüllte Packung (12) mit einem zweiten, folienförmigen Werkstoff mit guter Durchtrittssperrwirkung für Wasserdampf und Gase verschlossen wird,
**dadurch gekennzeichnet, dass**
die Durchtrittssperrwirkung der Packung (12) für Wasserdampf und Gase nach dem Formen der Behälter (26) in Form einer Beschichtung mit Materialien mit der gewünschten Durchtrittssperrwirkung im Vakuum erzeugt wird.

2. Verfahren nach Anspruch 1, **dadurch gekennzeichnet, dass** die Beschichtung durch Sputtem oder Verdampfen von Metallen, insbesondere von Aluminium, oder Metalloxiden, insbesondere von SiOₓ, wobei x eine Zahl zwischen 0.9 und 2 ist, oder durch Plasmapolymerisation von Siliziumoxiden, bevorzugt ausgehend von Organosilanen, insbesondere von Hexamethyldisiloxan (HMDSO) und Tetremethyldisiloxan (TMDSO), oder durch Plasmapolymerisation von hochvemetzten Kohlenwasserstoffschichten, insbesondere ausgehend von Methan, Ethylen oder Acetylen, auf die Packung (12) aufgebracht wird.

3. Verfahren nach Anspruch 1 oder 2, **dadurch gekennzeichnet, dass** die Beschichtung der Packung (12) auf der Behälterinnenseite durchgeführt wird.

4. Verfahren nach Anspruch 1 oder 2, **dadurch gekennzeichnet, dass** die Beschichtung der Packung (12) auf der Behälteraussenseite durchgeführt wird.

5. Verfahren nach Anspruch 4, **dadurch gekennzeichnet, dass** die Beschichtung auf die gefüllte und verschlossene Packung (12) aufgebracht wird.

6. Verfahren nach einem der Ansprüche 1 bis 5, **dadurch gekennzeichnet, dass** die Herstellung der Packungen (12), das Beschichten und ggf. das Abfüllen und Verschliessen in einer Linie durchgeführt wird.

7. Anwendung des Verfahrens nach einem der Ansprüche 1 bis 6 zur Herstellung von Blisterverpackungen mit guter Durchtrittssperrwirkung für Wasserdampf und Gase.

## Claims

1. Method of producing packages (12) from a first material (22) having a good barrier effect against the passage of water vapour and gases and comprising at least one recess serving as a container (26) for receiving products, the packages (12) with the recesses being formed from the first material (22), the products being poured into the containers (26) and the filled package (12) being sealed by a second film material having a good barrier effect against the passage of water vapour and gases, **characterised in that** the barrier effect of the package (12) against the passage of water vapour and gases is produced after the forming of the containers (26) by vacuum coating with materials having the desired barrier effect.

2. Method according to claim 1, **characterised in that** the coating is applied to the package (12) by sputtering or the evaporation of metals, in particular aluminium or metal oxides, in particular SiOₓ, where x is a number between 0.9 and 2, or by plasma polymerisation of silicon oxides, preferably departing from organosilanes, in particular hexamethyl disiloxane (HMDSO) and tetramethyl disiloxane (TMDSO), or by plasma polymerisation of highly crosslinked hydrocarbon layers, in particular departing from methane, ethylene or acetylene.

3. Method according to claim 1 or claim 2, **characterised in that** the coating of the package (12) is carried out on the inside of the container.

4. Method according to claim 1 or claim 2, **characterised in that** the coating of the package (12) is carried out on the outside of the container.

5. Method according to claim 4, **characterised in that** the coating is applied to the filled, sealed package (12).

6. Method according to one of claims 1 to 5, **characterised in that** the production of the packages (12), the coating and possibly the filling and sealing are carried out in line.

7. Use of the method according to one of claims 1 to 6 for the production of blister packs having a good barrier effect against the passage of water vapour and gases.

## Revendications

1. Procédé pour la fabrication d'emballages (12) à partir d'un premier matériau (22), à bon effet de barrage vis-à-vis du passage de la vapeur d'eau et des gaz, comportant au moins un renfoncement servant de récipient (26) pour recevoir une matière de remplissage, dans lequel on réalise par moulage les emballages (12) présentant le/les renfoncement(s) à partir du premier matériau (22), on remplit la matière de remplissage dans les récipients (26) et on ferme l'emballage rempli (12) par un deuxième matériau en feuille présentant un bon effet de barrage vis-à-vis du passage de la vapeur d'eau et des gaz,
**caractérisé en ce que**
l'effet de barrage vis-à-vis du passage de vapeur d'eau et des gaz présenté par l'emballage (12) est généré sous vide, après la mise en forme des récipients (26), sous la forme d'un revêtement avec des matériaux présentant l'effet désiré de barrage vis-à-vis du passage.

2. Procédé selon la revendication 1, **caractérisé en ce que** l'on applique le revêtement sur l'emballage (12) par pulvérisation ou par vaporisation de métaux, en particulier d'aluminium, ou d'oxydes métalliques, en particulier de SiOₓ, x étant un nombre compris entre 0,9 et 2, on bien par polymérisation au plasma d'oxydes de silicium, de préférence à partir d'organosilanes, en particulier de disiloxane d'hexaméthyle (HMDSO) ou de disiloxane de tétraméthyle (TMDSO), ou encore par polymérisation au plasma de couches d'hydrocarbure hautement réticulées, en particulier à partir de méthane, éthylène ou acétylène.

3. Procédé selon l'une ou l'autre des revendications 1 et 2, **caractérisé en ce que** l'on réalise le revêtement de l'emballage (12) sur le côté intérieur des récipients.

4. Procédé selon l'une ou l'autre des revendications 1 et 2, **caractérisé en ce que** l'on réalise le revêtement de l'emballage (12) sur le côté extérieur des récipients.

5. Procédé selon l'une ou l'autre des revendications 1 et 2, **caractérisé en ce que** l'on applique le revêtement sur l'emballage (12) rempli et fermé.

6. Procédé selon l'une des revendications 1 à 5, **caractérisé en ce que** la fabrication des emballages (12), le revêtement et le cas échéant le remplissage et la fermeture sont réalisés en une ligne.

7. Mise en oeuvre du procédé selon l'une des revendications 1 à 6 pour la fabrication d'emballages blisters présentant un bon effet de barrage vis-à-vis du passage de vapeur d'eau et de gaz.
